(19) Europäisches Patentamt / European Patent Office / Office européen des brevets

(11) **EP 2 715 397 B1**

(12) **EUROPÄISCHE PATENTSCHRIFT**

(45) Veröffentlichungstag und Bekanntmachung des Hinweises auf die Patenterteilung:
**14.09.2016 Patentblatt 2016/37**

(51) Int Cl.:
*G01S 15/32* *(2006.01)* *G01S 7/521* *(2006.01)*
*G01S 15/93* *(2006.01)*

(21) Anmeldenummer: **12718602.1**

(22) Anmeldetag: **30.04.2012**

(86) Internationale Anmeldenummer:
**PCT/EP2012/001867**

(87) Internationale Veröffentlichungsnummer:
**WO 2012/159703 (29.11.2012 Gazette 2012/48)**

(54) **UMFELDERFASSUNGSVORRICHTUNG IN EINEM KRAFTFAHRZEUG UND VERFAHREN ZUR UMFELDERFASSUNG UNTER AUSNUTZUNG EINER KORRELATION**

ENVIRONMENT MONITORING DEVICE IN A MOTOR VEHICLE AND METHOD FOR MONITORING THE ENVIRONMENT USING A CORRELATION

DISPOSITIF DE DÉTECTION DE L'ENVIRONNEMENT PLACÉ DANS UN VÉHICULE AUTOMOBILE ET PROCÉDÉ DE DÉTECTION DE L'ENVIRONNEMENT UTILISANT UNE CORRÉLATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.05.2011 DE 102011102202**

(43) Veröffentlichungstag der Anmeldung:
**09.04.2014 Patentblatt 2014/15**

(73) Patentinhaber: **Volkswagen Aktiengesellschaft 38436 Wolfsburg (DE)**

(72) Erfinder:
• PRAUSSE, Claudia
  38120 Braunschweig (DE)
• TANNEBERGER, Volkmar
  38527 Meine (DE)
• MAX, Stephan
  38518 Gifhorn (DE)

(56) Entgegenhaltungen:
EP-A2- 0 797 105        DE-A1-102008 016 558
DE-A1-102009 040 264    US-A1- 2007 115 102
US-A1- 2007 115 758

• HERNANDEZ A ET AL: "Ultrasonic ranging sensor using simultaneous emissions from different transducers", IEEE TRANSACTIONS ON ULTRASONICS, FERROELECTRICS AND FREQUENCY CONTROL, IEEE, US, Bd. 51, Nr. 12, 1. Dezember 2004 (2004-12-01), Seiten 1660-1670, XP011368786, ISSN: 0885-3010, DOI: 10.1109/TUFFC.2004.1386683
• ALVARO HERNANDEZ ET AL: "Ultrasonic Sensory System for Mobile Robots and Autonomous Vehicles", INDUSTRIAL ELECTRONICS, 2007. ISIE 2007. IEEE INTERNATIONAL SYMPOSIUM ON, IEEE, PI, 1. Juni 2007 (2007-06-01), Seiten 1548-1553, XP031156369, ISBN: 978-1-4244-0754-5

**Beschreibung**

Die Erfindung betrifft eine Umfelderfassungsvorrichtung nach dem Oberbegriff des Patentanspruchs 1 sowie ein Verfahren zur Umfelderfassung in einem Kraftfahrzeug nach dem Oberbegriff des Patentanspruchs 5.

Aus dem Stand der Technik ist es bekannt, das Umfeld eines Kraftfahrzeugs mittels Sensoren zu erfassen und die erfassten Sensorergebnisse auszuwerten, um Gegenstände in dem Umfeld zu erfassen, insbesondere indem ein oder mehrere Abstände zu Gegenständen in dem Umfeld ermittelt werden und hierüber auf Gegenstände geschlossen wird. Die so erfassten Ergebnisse werden für unterschiedliche Assistenzsysteme verwendet. Beispielsweise werden die Messergebnisse genutzt, um akustische Signale und/oder optische Signale an einen Fahrer eines Straßenfahrzeugs auszugeben, wenn sich dieser, insbesondere beim Einparken, einem Gegenstand im Umfeld des Fahrzeugs annähert. Als Kraftfahrzeug wird jedes motorgetriebene Landfahrzeug angesehen.

Aus dem Stand der Technik sind unterschiedliche Sensoren bekannt, um eine Umfelderfassung auszuführen. Für eine Erfassung im Nahbereich des Fahrzeugs, welcher insbesondere bei geringen Geschwindigkeiten, beispielsweise beim Einparken, von besonderem Interesse ist, werden im Stand der Technik häufig Sensoren eingesetzt, mittels denen ein Signal ausgesandt wird, welches an Gegenständen im Umfeld des Kraftfahrzeugs reflektiert wird und die reflektierten Signale von dem Sensor anschließend erfasst werden. Hierbei wird bei einem Typ von Messsensoren die Laufzeit zwischen dem Aussenden eines Sendesignals und dem Empfangen eines reflektierten Sendesignals, welches auch als Echosignal bezeichnet wird, ausgewertet. Ist die Ausbreitungsgeschwindigkeit des Signals bekannt, so kann aus der Laufzeit auf die von dem Sendesignal und dem Echosignal zurückgelegte Strecke und somit die Entfernung zu einem nächstliegenden Gegenstand zurückgeschlossen werden. Werden mehrere Sensoren eingesetzt, welche an dem Kraftfahrzeug beabstandet zueinander angeordnet sind, so können mithilfe von Triangulationsverfahren auch Positionen der die Echoimpulse zurücksenden Gegenstände im Umfeld ermittelt werden.

Ein System zur Hinderniserkennung ist aus der EP 1 619 518 A1 bekannt, bei dem eine Vielzahl von Ultraschallsensoren sowohl im vorderen als auch im hinteren Stoßfänger eines Fahrzeugs verbaut ist, welche Hindernisse in der Umgebung des Kraftfahrzeugs detektieren. Die Sensoren sind so ausgelegt, dass sie sowohl die Frequenz des Sendesignals als auch eine Mittenfrequenz eines Filters, welcher das Echosignal filtert, anpassen können. Hierdurch wird die Möglichkeit geschaffen, unterschiedliche Empfangsmikrofone in den einzelnen Sensoren zu betreiben, welche unterschiedliche Empfangscharakteristiken haben.

Aus der DE 692 10 584 T2 ist eine Ultraschallentfernungsmessvorrichtung für einen mobilen Roboter bekannt, die einen Sender zum Senden eines Strahls mit Ultraschallenergie in einer abtastenden Weise über einen interessierenden Zielbereich, einen Detektor zum Selektieren der zurückgeworfenen Ultraschallenergie, die Reflexionen des übertragenen bzw. gesendeten Strahls von dem Zielbereich umfasst, und einen Signalprozessor aufweist, um das durch den Detektor detektierte bzw. erfasste Signal zu verstärken, wobei der Prozessor eine Korrelationseinrichtung mit einem Referenzsignal aufweist, in dem das Referenzsignal eine Darstellung des gegenwärtigen Signals ist, das durch den Detektor erzeugt worden ist, wenn der gesendete und übertragene Strahl bei üblichem Einfall von einer interessierenden ebenen Referenzzieloberfläche reflektiert worden ist, wobei der Prozessor auch einen Computerspeicher umfasst, um die Signaldarstellung zu speichern und diese als ein Referenzsignal an die Korrelationseinrichtung während der Detektion eines Signals anzulegen, das die Reflexion von einem zu detektierenden Ziel bzw. Objekt darstellt. Ziel dieses Verfahrens ist es, falsche Entfernungserfassungen zu vermeiden, die beispielsweise entstehen, wenn in einer Ecke eines Raumes das gesendete Signal mehrfach reflektiert wird.

Für eine möglichst fehlerfreie Detektion ist es wünschenswert, eine hohe Signalstärke des reflektierten Signals zu erhalten. Dieses führt zu einem guten Signalrauschverhältnis, welches letztendlich für die Detektionsgüte verantwortlich ist. Daher wurden Ultraschallsensoren gemäß dem Stand der Technik im Stoßfänger gewöhnlich in der Weise integriert, dass in eine äußere Fläche des Stoßfängers Öffnungen eingebracht werden, in die die Sende- und/oder Empfangssensoren eingesetzt werden. Häufig werden die Sendeeinrichtung und die Empfangseinrichtung in einen gemeinsamen Ultraschallwandler integriert, wobei dasselbe Schwingungselement sowohl zum Aussenden des Ultraschallsignals als auch zum Empfangen des Ultraschallsignals verwendet wird. Aus dem Stand der Technik sind hier beispielsweise Ultraschallwandler bekannt, welche Piezomaterialien zur Wandlung elektrischen Stroms in mechanische Schwingung bzw. der mechanischen Schwingung in elektrische Signale nutzen.

Aus aerodynamischen und optischen Gründen sowie fertigungstechnischen Überlegungen ist es jedoch wünschenswert, die Oberflächen der Stoßfänger, welche heutzutage häufig in derselben Farbe lackiert werden wie die übrigen Karosserieteile des Kraftfahrzeugs, nicht zu durchbrechen. Daher sind aus dem Stand der Technik auch Sensoren bekannt, die von außen nicht sichtbar in Karosserieteile, insbesondere Stoßfänger, von Kraftfahrzeugen integriert werden. Diese werden hinter einer äußeren Oberfläche angeordnet. Ein Beispiel hierfür ist in der WO 2008/125260 A1 beschrieben.

Bei diesen Systemen wird das Ultraschallsignal durch die äußere Oberfläche, also durch ein physisch ausgebildetes Bauteil hindurch, in das Umfeld des Kraftfahrzeugs ausgesandt. Auch die Detektion des reflektierten Ultraschallsignals erfolgt erneut durch die äußerste Wand des Karosseriebauteils hindurch. Es versteht sich, dass dieses Bauteil sowohl für das Sendesignal als auch für das Echosignal eine Dämpfung bewirkt. Eine Möglichkeit, dieser Dämpfung zu begegnen, bestünde darin, die Sendeleistung und/oder eine Empfindlichkeit der Empfangseinrichtung zu steigern. Eine Steigerung der abgestrahlten Sendeleistung, d.h. eine Verbesserung der Sendeeinrichtung, ist technisch realisierbar, jedoch mit einem nicht unerheblichen Kostenaufwand verbunden. In Massenproduktion hergestellte Ultraschallwandler, welche auch für einen nicht verdeckten Einsatz, d.h. ein Einbringen in eine Durchbrechung der äußersten Karosserie- bzw. Stoßfängerwand vorgesehen sind, könnten dann nicht zum Einsatz kommen, so dass die Stückkosten für einen Einsatz in Kraftfahrzeugen erheblich steigen würden.

Das Dokument US 20070115102 A1, das zur Abgrenzung nach der zweiteiligen Form verwendet wird, beschreibt einen Ultraschallsensor eines Fahrzeugs zur Bestimmung von Hindernissen im Umfeld des Fahrzeugs, wobei der Ultraschallsensor in einem Gehäuse untergebracht und an der Rückseite eines Stoßfängers angeordnet ist, so dass der Sendepuls und der Empfangspuls den dämpfenden Stoßfänger passieren muss. Abstände zu im Umfeld befindlichen Objekten werden in üblicher Weise durch die Laufzeit zwischen Sendepuls und Empfangspuls bestimmt.

Die Druckschrift A. Hernandez et.al: "Ultrasonic ranging sensor using simultaneous emissions from different transducers", IEEE Transactions On Ultrasonics, Ferroelectics and Frequency Control, Bd. 12, Nr. 12, S. 1660 - 1670, Dezember 2004, beschreibt einen auf Ultraschall basierenden Sensor zur Abstandsbestimmung, wobei der Abstandssensor simultane Emissionen mehrerer Ultraschallwandlern auswertet. Dabei werden in einer vorbestimmten linearen Geometrie vier Wandler angeordnet, so dass vier Laufzeitmessungen zur Abstandsbestimmung eines Hindernisses simultan möglich sind, wodurch eine Positionsbestimmung des Hindernisses möglich wird. Zur Messung werden komplementäre Golay-Sequenzpaare simultan von zwei der vier Wandler ausgesendet, wobei die komplementären Golay-Sequenzpaare für die Sender QPSK-moduliert werden. In der Empfangsstufe führt der Empfänger eine Korrelation zwischen dem Empfangssignal und dem Sendesignal durch, wodurch sich die I- und Q-Komponenten des QPSK-modulierten Signals ergeben, aus denen mittels einer weiteren Korrelation sich die Golay-Sequenzen bestimmen lassen. Aus den beiden Korrelationen können die entsprechenden Laufzeiten bestimmt werden.

Die Druckschrift EP 0 797 105 A2 betrifft ein Verfahren zur Laufzeitmessung bei Ultraschall-Durchflussmessern, wobei der Sender pulsförmige Signale abgibt, die den Empfänger als über mehrere Schwindungen ansteigende und wieder abfallende Wellengruppe erreichen. Das analoge Empfangssignal wird abgetastet, digitalisiert und es wird die Kreuzkorrelationsfunktion mit einem Referenzsignal berechnet. Aus dem Maximum der Einhüllenden der Kreuzkorrelationsfunktion kann die Laufzeit des Signals ermittelt werden. Eingesetzt wird das Verfahren bei Durchflussmessern, mittels denen die Fließgeschwindigkeit eines Mediums bestimmt werden kann.

Die Druckschrift A. Hernandez et.al: "Ultrasonic Sensory System for Mobile Robots and Autonomous Vehicles", Industrial Electronics, 2007. ISIE 2007. IEEE International Symposium ON, S. 1548-1553, 1. Juni 2007, offenbart ein auf Ultraschall basierendes Sensorsystem für mobile Roboter und autonome Fahrzeuge. Dabei wird ein Abstandssensor mit vier Wandlern verwendet, wobei die Abstände zu einem Hindernis aus gemessenen Laufzeiten bestimmt werden. Zur Erhöhung der Genauigkeit bei der Abstandsbestimmung werden Korrelationstechniken eingesetzt, wobei das Sendesignal einer binären Kodierung mittels BPSK unterzogen wird. Der Detektionsvorgang kann mittels einer Korrelation bzw. Kreuzkorrelation mit einem bekannten Muster und einer Suche nach einem lokalen Maximum innerhalb der empfangenen Echos durchgeführt werden.

Der Erfindung liegt die Aufgabe zugrunde, eine Umfelderfassung für verdeckt eingebaute Ultraschallsensoren bzw. Ultraschallwandler zu verbessern, ohne die Kosten und einen technischen Aufwand in Form von technischen benötigten Komponenten und deren Auslegung deutlich gegenüber Systemen zu erhöhen, die für Umfelderfassungslösungen eingesetzt werden, welche mit nicht verdeckt eingebauten Ultraschallsende- und/oder Empfangseinrichtungen in Kraftfahrzeugen genutzt werden.

Die Aufgabe wird erfindungsgemäß durch eine Umfelderfassungsvorrichtung mit den Merkmalen des Patentanspruchs 1 sowie ein Verfahren zur Umfelderfassung mit den Merkmalen des Patentanspruchs 5 erfindungsgemäß gelöst. Vorteilhafte Ausgestaltungen der Erfindung ergeben sich aus den Unteransprüchen.

Der Erfindung liegt der Gedanke zugrunde, die Signalauswertung zu verbessern und zu optimieren. Eine Veränderung der Auswertung der empfangenen Echosignale ist ohne einen wesentlichen Kostenaufwand möglich, da eine Änderung der Elektronik, ohne oder mit nur geringen Mehrkosten gegenüber Systemen, erreichbar ist, die derzeit zur Auswertung der Echosignale eingesetzt werden. Ansonsten können im Wesentlichen dieselben Hardwarekomponenten verwendet werden, die auch für einen nicht verdeckten Einbau der Ultraschallsende- und Empfangseinrichtungen verwendet werden.

Eine bevorzugte Ausführungsform einer Umfelderfassungsvorrichtung in einem Kraftfahrzeug umfasst eine Signalerzeugungseinrichtung zum Erzeugen eines Sendesignals, mindestens einen Ultraschallwandler zum Wandeln elektrischer Schwingungen in akustische Schwingungen und/oder umgekehrt, eine Auswerteeinrichtung, die ein Empfangssignal auswertet, um einen oder mehrere Abstände zu Gegenständen in einem Umfeld des Kraftfahrzeugs zu ermitteln, wobei die Signalerzeugungseinrichtung mit dem mindestens einen Ultraschallwandler verknüpft ist, so dass der Ultraschallwandler entsprechend des elektrischen Sendesignals ein Ultraschallsendesignal in das Umfeld abstrahlt und die Auswerteeinrichtung mit dem mindestens einen Ultraschallwandler oder mindestens einem weiteren Ultraschallwandler verbunden ist, um das elektrische Signal zu empfangen, das an dem mindestens einen Ultraschallwandler oder dem mindestens einen weiteren Ultraschallwandler aus dem reflektierten Ultraschallsendesignal (dem Echosignal) abgeleitet ist, wobei der mindestens eine Ultraschallwandler und gegebenenfalls der mindestens eine weitere Ultraschallwandler in dem Fahrzeug stoffschlüssig an einer von dem Umfeld abgewandten Seite eines Karosseriebauteil, d.h. einer Fahrzeugkomponenten, angeordnet sind, so dass zwischen dem mindestens einen Ultraschallwandler und gegebenenfalls dem mindestens einen weiteren Ultraschallwandler und dem zu überwachenden Umfeld des Kraftfahrzeugs jeweils eine geschossene, physisch ausgebildete Fläche einer Fahrzeugkomponente, insbesondere eine Wand eines Stoßfängers, angeordnet ist und die Auswerteeinheit eine Korrelationseinheit umfasst, die eine Kreuzkorrelation des Sendesignals mit dem Empfangssignal bildet und ferner ausgebildet ist, den einen oder die mehreren Abstände zu Gegenständen im Umfeld anhand des aus der Kreuzkorrelation berechneten Korrelationssignals zu ermitteln. Dabei umfasst die Steuerungseinrichtung eine Modulationseinrichtung, die das periodische Schwingungssignal moduliert, um ein moduliertes Sendesignal zu erzeugen, wobei die Modulationseinrichtung eine Frequenzmodulation ausführt.

Zunächst wird in einer Ultraschallmessvorrichtung jeweils ein Sendesignal, heute in der Regel digital, erzeugt, welches anschließend in ein analoges Signal gewandelt und verstärkt wird, welches zum Antreiben eines Aktors genutzt wird, der wiederum eine Fahrzeugkomponente zumindest lokal zu Schwingungen anregt, wodurch das Ultraschallsignal ausgesandt wird. Das Sendesignal wird so erzeugt, dass dieses nur in einem begrenzten Zeitbereich Schwingungen des Ultraschallwandlers anregt. Das Sendesignal umfasst einen Pulsabschnitt, in dem beim Senden des Sendesignals der Ultraschallwandler zum Erzeugen von Ultraschall angeregt wird, und einen Konstantabschnitt, in dem keine Anregung des Ultraschallwandlers stattfindet. Für eine Korrelation mit dem Empfangssignal ist somit nur der Pulsabschnitt des Sendesignals von Interesse, also jener Zeitabschnitt des Sendesignals der den Ultraschallwandler zur Schwingung angeregt und ein Abstrahlen des Ultraschallsendesignals bewirkt. Zum Ausführen der Kreuzkorrelation wird das gewandelte Empfangssignal, welches dem gewandelten Echosignal entspricht, jeweils um einen Betrag $\tau$ zeitverschoben mit dem Sendesignal multipliziert und über eine mögliche Intervalllänge T integriert. Diese mögliche Intervalllänge ist in der Praxis dadurch begrenzt, dass der Sensor, d.h. die Umfelderfassungsvorrichtung, iterativ Sendesignale aussendet. Anders betrachtet erzeugt die Messvorrichtung ein Sendesignal, welches iterativ Pulsabschnitte umfasst. Eine maximal sinnvolle Integrationszeit ist somit durch eine solche Iterationszykluszeit, d.h. die Zeit zwischen aufeinanderfolgenden Sendepulsabschnitten, festgelegt. Abhängig von dem Betrag der zeitlichen Verzögerung ö der Signale ergibt sich ein

Korrelationssignal der Kreuzkorrelation $\Psi(\tau) = \dfrac{1}{2T} \int\limits_{-T}^{T} s(t)e(t-\tau)dt$ , wobei s(t) das Sendesignal und e(t) das Empfangssignal repräsentieren.

Besonders bevorzugt wird der Sendepuls so erzeugt, dass das Sendesignal einen Pulsabschnitt und einen zeitlich unveränderlichen Konstantabschnitt umfasst, wobei der Pulsabschnitt aus mindestens einem zeitlich begrenzten Abschnitt eines periodischen Schwingungssignals abgeleitet oder als periodisches Schwingungssignal erzeugt wird. Bei einer solchen Ausführungsform ergibt es sich, dass in der Korrelation jeweils nur die Abschnitte des Empfangssignals zum Korrelationsergebnis beitragen können, die mit dem Pulsabschnitt des Sendesignals multipliziert werden. Die Integrationszeitlänge kann somit an die Länge des Pulsabschnitts geeignet angepasst werden.

Es lässt sich mathematisch zeigen, dass sich ein Signal zu Rauschverhältnis bis zu einer so genannten Cramer Rao Grenze verbessern lässt, indem eine Abtastfrequenz, mit der das Sende- und Empfangssignal digitalisiert werden bzw. sind und/oder eine Signallänge des Pulsabschnitts des Sendesignals verlängert werden. Eine Erhöhung der Abtastfrequenz erhöht die Anforderung und somit die Kosten für die Digitalisierungselektronik, wohingegen eine Verlängerung des Pulsabschnitts des Sendesignals dazu führt, dass eine räumliche Auflösung, welche mit der Messung erzielbar ist, reduziert wird. Somit ist hier ein Kompromiss hinsichtlich einer Schwingungsanzahl, die in dem Pulsabschnitt enthalten ist, und einem erzielbaren Signalrauschverhältnis abzuwägen. Eine gesteigerte Länge des Pulsabschnitts des Sendesignals ebenso wie eine Erhöhung der Abtastfrequenz führen darüber hinaus zu einem gesteigerten Speicherbedarf in der Auswerteeinrichtung und wirken sich somit negativ auf die Systemkosten und Systemressourcen aus.

Die gewählte Korrelation ist zwar dafür geeignet, um statistisches Rauschen, welches im Empfangssignal enthalten ist, oder Signalanteile, die in einem gegenüber der in dem Pulsabschnitt enthaltenen Grundfrequenz abweichenden Frequenzbereich liegen, zu unterdrücken, Störanteile, die von Störquellen stammen, deren Frequenz im Bereich der Frequenz der Schwingungen liegt, mit der der Ultraschallwandler beim Senden des Pulsabschnitts schwingt, werden jedoch nicht unterdrückt. Um eine Abtrennung solcher Signale zu ermöglichen, ist bei einer Ausführungsform vorgesehen, dass die Signalerzeugungseinrichtung ausgebildet ist, ein moduliertes periodisches Schwingungssignal als Sendesignal abzuleiten oder zu erzeugen. Hierfür kann die Signalerzeugungseinrichtung beispielsweise eine Modulationseinrichtung umfassen. Wird das Sendesignal digital erzeugt, so kann dieses beispielsweise auch in einem Speicher abgelegt sein und das modulierte Signal direkt bei der Digital-Analogwandlung erzeugen.

Eine besonders gute Unterdrückung von Störsignalen erhält man, wenn das die Modulation darstellende Modulationssignal ein Binärsignal ist, insbesondere ein Barker- oder ein GoldCode oder eine Pseudozufallszahl ist. Das Modulationssignal ist jenes Signal, welches informationstechnisch die Änderung der Schwingung in dem Pulsabschnitt festlegt.

Besonders bevorzugt bewirkt die Frequenzmodulation einen Wechsel zwischen mindestens zwei Frequenzen im Bereich der Eigenfrequenz des mindestens einen Ultraschallwandlers beim Erzeugen des Pulsabschnitts abhängig von dem Modulationssignal. Es ergibt sich, dass als Modulationssignal auch nicht binäre Signale genutzt werden können, so dass der Pulsabschnitt mehr als zwei Frequenzkomponenten im Bereich der Eigenfrequenz des Ultraschallwandlers aufweisen kann.

Ein weiterer Vorteil der Verwendung eines modulierten Schwingungssignals im Pulsabschnitt des Sendesignals besteht darin, dass eine verbesserte Auswertung, insbesondere bei zeitgleicher Verwendung mehrerer Sensoren, in einem Kraftfahrzeug ausgeführt werden kann, die jeweils ein Sendesignal aussenden, welches sich von den Sendesignalen der anderen Ultraschallwandler unterscheidet. Die Korrelation des jeweiligen aus dem Echosignal gewandelten Empfangssignals mit dem entsprechenden zugehörigen Sendesignal führt zur Abtrennung der Anteile, die durch Sendesignale anderer Sensoren verursacht sind.

Eine noch weiter verbesserte Korrelationsauswertung erhält man bei einer Ausführungsform, bei der die Korrelation jenes Signal als Sendesignal verwendet, welches aus den Schwingungen des Ultraschallwandlers während des Aussendens des Sendesignals abgeleitet ist. Es hat sich gezeigt, dass sich das tatsächlich ausgesandte Ultraschallsendesignal leicht von dem Sendesignal unterscheidet, mit dem der Ultraschallwandler angetrieben wird. Dies hat seine Ursache darin, dass der Ultraschallwandler als mechanisches System eine Trägheit aufweist, wodurch dieser ein An- und Ausschwingverhalten zeigt. Dies ist insbesondere im Ausschwingverhalten von Bedeutung, da dieses nur mäßig gedämpft ist, da eine Anregung immer im Bereich der Resonanzfrequenz des Ultraschallwandlers erfolgen muss, um eine möglichst effiziente Ultraschallabstrahlung zu erreichen. Die Korrelation wird somit dadurch verbessert, dass dieser durch das An- und Nachschwingen bedingte Anteil des Sendepulses, wie er tatsächlich ausgesandt wird, mit berücksichtigt wird. An dieser Stelle wird angemerkt, dass aufgrund der wesentlich geringeren Amplitude, mit der der Ultraschallwandler beim Empfangen des Echoimpulses ausgelenkt wird, diese Effekte für das Empfangssignal deutlich reduziert sind.

In der Regel wird der Ultraschallwandler, welcher die Fahrzeugkomponente zumindest lokal zu Schwingungen anregt, um das Ultraschallsendesignal in das Umfeld auszusenden, auch genutzt, um das reflektierte Ultraschallechosignal zu empfangen, welches die Fahrzeugkomponente erneut in Schwingungen versetzt. Hierbei wird ausgenutzt, dass das Sendesignal einen Pulsabschnitt endlicher Dauer aufweist, der eine aktive Anregung des Ultraschallwandlers bewirkt, und einen Konstantabschnitt aufweist, der keine aktive Anregung des Ultraschallwandlers bewirkt. Während der Konstantabschnitt des Sendesignals die Anregung des Ultraschallwandlers steuert (welche nicht erfolgt), kann der Ultraschallwandler die durch das Echosignal verursachten Schwingungen der Fahrzeugkomponente erfassen und in das Empfangssignal wandeln. Andere Ausführungsformen können jedoch vorsehen, einen weiteren Ultraschallwandler für den Empfang des Echosignals zu nutzen. Auch dieser ist verdeckt, das heißt entweder an der Fahrzeugkomponente an der dem Umfeld abgewandten Seite stoffschlüssig angebracht oder an einer anderen Fahrzeugkomponente ebenfalls auf der dem Umfeld abgewandten Seite verdeckt stoffschlüssig angeordnet.

Nachfolgend wird die Erfindung anhand bevorzugter Ausführungsbeispiele näher erläutert. Hierbei zeigen:

Fig. 1    eine schematische Darstellung unterschiedlicher Verbauformen von Ultraschallsensoren in Stoßfängern gemäß dem Stand der Technik bei einem Einbau in Aussparungen einer äußeren Wand eines Stoßfängers;

Fig. 2    eine schematische Abbildung eines Ultraschallwandlers nach dem Stand der Technik, welcher verdeckt in einem Stoßfänger eingebaut ist;

Fig. 3    eine schematische Darstellung einer Umfelderfassungsvorrichtung; und

Fig. 4    ein schematisches Ablaufdiagramm eines Verfahrens zur Umfelderfassung.

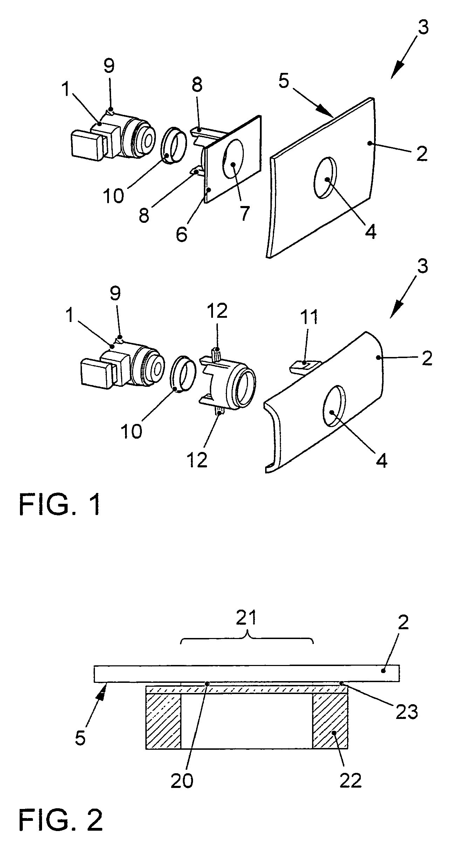

In Fig. 1 sind zwei mögliche Varianten schematisch angedeutet, wie im Stand der Technik Ultraschallwandler 1 in die äußeren Begrenzungswände 2 von Stoßfängern integriert werden. Bei beiden dargestellten Ausführungsvarianten wird in die äußere Wand 2 des Stoßfängers 3 jeweils eine Durchgangsöffnung 4 eingebracht. Diese Durchgangsöffnung 4 kann gebohrt, gestanzt oder auf andere Weise ausgebildet werden. Bei dem oberen dargestellten Beispiel wird auf eine Innenseite 5 der äußeren Wand 2 des Stoßfängers 3 eine Halterung 6 aufgeklebt oder angeschweißt. Die Halterung 6 weist ebenfalls eine Durchgangsöffnung 7 auf, welche zentrisch mit der Durchgangsöffnung 4 der äußeren Wand 2 des Stoßfängers 3 ausgerichtet ist. Ferner weist die Halterung 6 Rastmittel 8 auf, in welche Vorsprünge 9 des Ultraschallwandlers 1 in einem eingebauten Zustand eingreifen und den Ultraschallwandler 1 in der Halterung 6 arretieren. Zwischen dem Ultraschallwandler 1 und der Halterung 6 wird ein Abstands- und Dämpfungselement 10 eingesetzt, welches eine Entkopplung der durch den Ultraschallwandler 1 erzeugten Schwingungen und der äußeren Wand 2 des Stoßfängers 3 bewirken soll.

Die zweite dargestellte Ausführungsform unterscheidet sich von der ersten Ausführungsform lediglich dadurch, dass an der äußeren Wand 2 des Stoßfängers 3 Stoßfängerrastmittel 11 ausgebildet sind, die mit Gegenelementen 12 der Halterung 6 bei einem Verrasten der Halterung 6 an der Innenseite 5 der äußeren Wand 2 des Stoßfängers 3 wechselwirken. Bei den dargestellten Einbauvarianten wird das abgestrahlte Ultraschallsignal durch die äußere Wand 2 weder beim Senden noch beim Empfangen beeinträchtigt.

In Fig. 2 ist eine Ausführungsform eines Stoßfängers mit einem Ultraschallwandler schematisch dargestellt, bei der der Ultraschallwandler verdeckt eingebaut ist. Die äußere Wand 2 des Stoßfängers 3 weist in diesem Fall keine Durchbrechung auf. Ein Piezokeramikmodul 20, welches als Ultraschallwandler dient, ist an einer Innenseite 5 einer äußeren Wand 2 des Stoßfängers 3 appliziert. In einem Teilbereich 21, in dem Schall abgestrahlt wird, ist auf die Innenseite 5 der äußeren Wand 2 des Stoßfängers 3 eine Verrippung 22 geklebt. Das Piezokeramikmodul 20 ist hierbei in einer Klebefuge 23 zwischen der Verrippung 22 und der Wand 2 des Stoßfängers 3 angeordnet. Diese Anordnung ist beispielsweise in der WO 2008/125260 A1 detaillierter beschrieben.

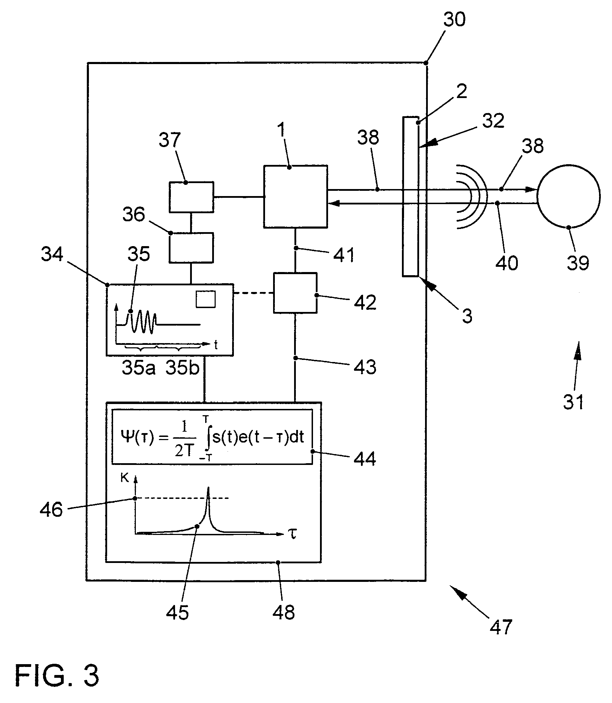

In Fig. 3 ist eine Umfelderfassungsvorrichtung schematisch dargestellt. Ein Ultraschallwandler 1 ist bezüglich eines Umfelds 31 "hinter" einer äußeren Wand 2 eines Karosserieteils, beispielsweise eines Stoßfängers 3, angeordnet. Der Ultraschallwandler ist stoffschlüssig an der dem Umfeld 31 abgewandten Seite der Wand 2 angeordnet. Die äußere Wand 2 ist im Bereich der Anordnung des Ultraschallwandlers 1 nicht durchbrochen und weist eine geschlossene Oberfläche 32 auf.

Eine Signalerzeugungseinrichtung 34 erzeugt ein Sendesignal 35. Das Sendesignal umfasst einen Pulsabschnitt 35a und einen Konstantabschnitt 35b. Über einen Digital-Analogwandler 36 und einen Verstärker 37 wird das Sendesignal in ein Signal umgewandelt, welches den Ultraschallwandler 1 antreibt und diesen in Schwingungen versetzt, so dass zumindest lokal auch die Wand 2 in Schwingungen versetzt wird und ein Ultraschallsendesignal 38 ausgesandt wird. Dieses wird durch die Wand 2 in das Umfeld 31 ausgesandt und trifft dort gegebenenfalls auf einen Gegenstand 39 in dem Umfeld 31. Das Ultraschallsendesignal 38 wird an dem Gegenstand 39 zumindest teilweise als Echosignal 40 auf die Wand 2 zurückreflektiert und durch die Wand 2 hindurch auf den Ultraschallwandler 1 übertragen. Der Ultraschallwandler 1 wird somit durch das Echosignal in Schwingungen versetzt und wandelt diese in ein elektrisches Signal 41, welches über den A/D-Wandler 42 in ein nun digitales Empfangssignal 43 gewandelt wird.

In einer Korrelationseinheit 44 wird eine Kreuzkorrelation für unterschiedliche Zeitverzögerungen $\tau$ zwischen dem Sendesignal 35 und dem Empfangssignal 43 berechnet. Hieraus entsteht ein Korrelationssignal 45, welches schematisch grafisch gegenüber der Verzögerungszeit $\tau$ aufgetragen ist. Korrespondierend mit einem Verzögerungszeitpunkt, zu dem eine Korrelation einen Korrelationsschwellwert 46 übersteigt, d.h. eine sehr gute Übereinstimmung zwischen dem Sendesignal und dem Empfangssignal festgestellt wird, wird ein Gegenstand in dem Umfeld 31 erkannt. Die Zeitverzögerung ist hierbei ein Maß für die Zeit, welche zwischen dem Aussenden des Sendeimpulses und dem Empfang des Echoimpulses vergangen ist, so dass hierüber auf den Abstand des Gegenstands 39 von dem Kraftfahrzeug 47 zurückgeschlossen werden kann, in dem der Ultraschallwandler 1 bzw. die Umfelderfassungsvorrichtung 30 eingebaut ist. Die Auswertung des Korrelationssignals 45 erfolgt in einer Auswerteeinheit 48. Die Korrelationseinheit 42 ist Bestandteil der Auswerteeinheit 46. Die Auswerteinheit kann weitere Auswerteschritte vornehmen, beispielsweise den Abstand ermitteln und/oder eine Umfeldkarte oder Ähnliches erstellen. Der Abstände ergeben sich aus den Zeitpunkten, an denen das Korrelationssignal Maxima aufweist, unter Berücksichtigung der Schallausbreitungsgeschwindigkeit des Ultraschallsendesignals und des Echosignals.

Bei der beschriebenen Ausführungsform ist nur ein Ultraschallwandler vorgesehen. Andere Ausführungsformen können mehrere Ultraschallwandler vorsehen, die zeitgleich oder zeitversetzt zum Aussenden und Empfangen von Ultraschallsignalen genutzt werden.

Um Störsignale beispielsweise von anderen elektronischen Komponenten des Kraftfahrzeugs zu unterdrücken, ist bei einer Ausführungsform vorgesehen, dass die Signalerzeugungseinrichtung 34 ein moduliertes Sendesignal erstellt, was bedeutet, dass der Pulsabschnitt des Sendesignals nicht nur die Schwingungen einer Frequenz und einheitlichen Amplitude aufweisen, sondern die Frequenz und/oder Amplitude der Schwingungen in dem Pulsabschnitt variiert ist. Hierbei versteht es sich für den Fachmann, dass hierunter nicht das An- und Ausschwingverhalten des Sendesignals gemeint ist.

Bei wieder einer anderen Ausführungsform kann das Sendesignal, welches zur Korrelation genutzt wird, während des Sendens über dem D/A-Wandler erfasst werden, so dass das dem tatsächlich ausgesandten Ultraschallsendesignal entsprechende empfangene Sendesignal mit dem empfangenen Empfangssignal, welches aus dem Echosignal abgeleitet ist, korreliert wird.

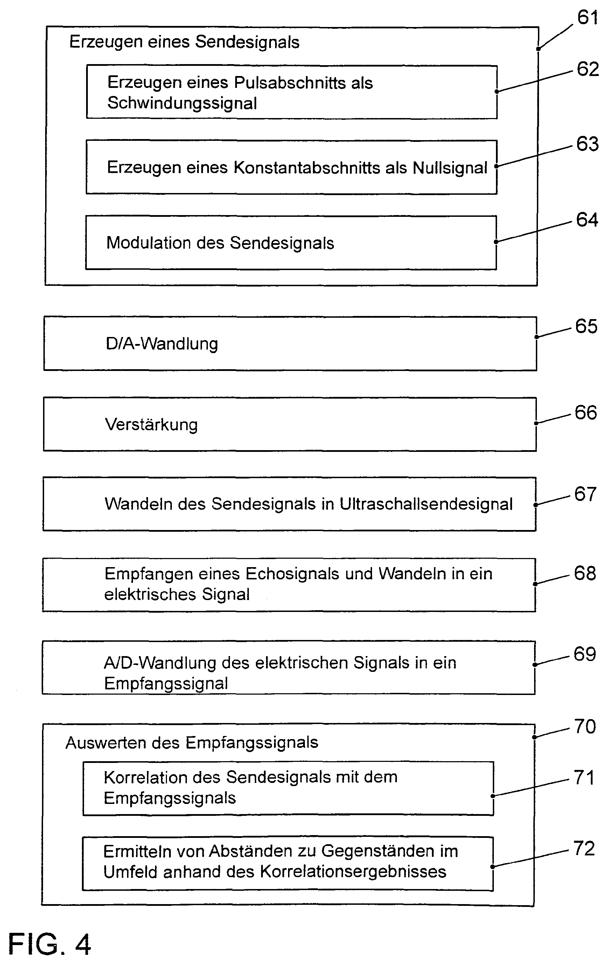

Anhand von Fig. 4 wird ein beispielhafter Verfahrensablauf eines Messzyklus noch einmal schematisch erläutert. Zunächst wird ein Sendesignal erzeugt 61. Dieses umfasst im Wesentlichen das Erzeugen eines Pulsabschnitts, in dem das Sendesignal eine periodische Schwingung umfasst. Die restlichen Abschnitte des Sendesignals werden als Konstantabschnitte erzeugt 63. Bei einer Ausführungsform ist vorgesehen, dass die periodischen Schwingungen, welche den Pulsabschnitt des Sendesignals darstellen, moduliert werden 64, beispielsweise eine Frequenz der Schwingungen zwischen unterschiedlichen Frequenzen, die benachbart zu der mechanischen Resonanzfrequenz des Ultraschallwandlers sind, über den das Sendesignal in Ultraschallsendesignale umgewandelt werden soll, variiert wird. Vorzugsweise findet diese Variation gemäß eines Barker-Codes, Gold-Codes oder einer Pseudozufallszahl statt, welche beispielsweise einfach mittels rückgekoppelter Schieberegister erzeugt werden können.

Das Sendesignal wird dann von einem digitalen Signal in ein analoges Signal gewandelt 65 und verstärkt 66. Hierdurch wird der Ultraschallwandler angetrieben und wandelt das Sendesignal in ein Ultraschallsendesignal 67. Anschließend wird mit dem Ultraschallwandler ein Echosignal empfangen 68 und in ein elektrisches Signal gewandelt, welches über einen A/D-Wandler in ein digitales Empfangssignal umgewandelt wird 69. Das Empfangssignal wird anschließend ausgewertet 70. Das Sendesignal und das Empfangssignal werden hierbei für unterschiedliche Zeitverschiebungen $\tau$ korreliert 71. Hierbei werden das Sendesignal und das Empfangssignal miteinander multipliziert und über die Zeit integriert. Anhand des sich ergebenden Korrelationssignals werden anschließend Abstände zu Gegenständen im Umfeld des Kraftfahrzeugs ermittelt 72, sofern solche Gegenstände vorhanden sind.

Der Vorteil der beschriebenen Ausführungsformen liegt darin, dass ohne eine Umkonstruktion von Stoßfängern an diesen Ultraschallwandler angeordnet und genutzt werden können, die dennoch eine zuverlässige Umfelderfassung ermöglichen. Die durch die Dämpfung, welche beim Durchdringen beispielsweise einer Stoßfängerwand auftreten, werden dadurch kompensiert, dass das Signalrauschverhältnis aufgrund der Korrelation deutlich verbessert wird. Für das gefilterte Rauschsignal gilt:

$$\sigma_{gefiltertesRauschsignal} = \frac{\sigma_{Rauschsignal}}{\sqrt{N}} = \frac{\sigma_{Rauschsignal}}{\sqrt{\frac{f_{Abtast}}{f_{Sende}}a_{AnzahlSchwingungen}}} = \frac{\sigma_{Rauschsignal}}{\sqrt{1024}} = \frac{\sigma_{Rauschsignal}}{32}$$

Hierbei ist $f_{sende}$ die Sendefrequenz, welche beispielsweise 50 kHz beträgt, und $f_{Abtast}$ die Abtastfrequenz, mit der eine Digitalisierung vorgenommen wird, welche beispielsweise 400 kHz beträgt. a gibt die Anzahl der Schwingungen in dem Pulsabschnitt an und wird beispielsweise auf 128 festgelegt. Durch die Korrelation kann somit das Rauschsignal um einen Faktor 1/32 reduziert werden. Hierbei stellt eine Anzahl von 128 Schwingungen bei einer Sendefrequenz von 50 kHz eine Pulslänge I dar:

$$I_{Puls} = \frac{c_0}{f}a_{AnzahlSchwingungen} = 88cm \, ,$$

die zugleich die maximale Auflösung des Systems festlegt. In der Praxis ist daher eine Optimierung zwischen der Anzahl der Schwingungen in dem Pulsabschnitt und einer Abtastfrequenz, welche noch zu vertretbaren Kosten umsetzbar ist, zu wählen, um ein möglichst gutes Signalrauschverhältnis zu erreichen.

Die Verwendung von Gold-, Barker-Codes oder Pseudozufallszahlen zur Modulation des Signals bewirkt zum einen den Vorteil, dass ein maximaler Korrelationsabstand zwischen zwei Sendesignalen, welche mit unterschiedlichen Barker-, Gold-Codes oder Pseudozufallszahlen moduliert sind, bei der Auswertung erhalten wird. Hierdurch wird es möglich, zeitgleich unterschiedliche Sendesignale zu senden und auszuwerten und somit mehrere Ultraschallwandler zeitgleich zu betreiben, was im Stand der Technik derzeit nicht möglich ist. Darüber hinaus führt die Modulation dazu, dass Störquellen unterdrückt werden, welche in dem Frequenzbereich auftreten, in dem die Schwingungen des Pulsabschnitts liegen.

Es versteht sich für den Fachmann, dass hier lediglich beispielhafte Ausführungsformen beschrieben sind. Die beschriebenen Merkmale können in beliebiger Kombination zur Umsetzung der Erfindung genutzt werden.

**Patentansprüche**

1. Umfelderfassungsvorrichtung (30) in einem Kraftfahrzeug umfassend:

eine Signalerzeugungseinrichtung (34) zum Erzeugen eines Sendesignals;
mindestens einen Ultraschallwandler (1) zum Wandeln elektrischer Schwingungen in akustische Schwingungen und/oder umgekehrt;
eine Auswerteeinrichtung, die ein Empfangssignal auswertet, um einen oder mehrere Abstände zu Gegenständen in einem Umfeld des Kraftfahrzeugs zu ermitteln, wobei die Signalerzeugungseinrichtung (34) mit dem mindestens einen Ultraschallwandler (1) verknüpft ist, so dass der Ultraschallwandler (1) entsprechend des elektrischen Sendesignals ein Ultraschallsendesignal in das Umfeld abstrahlt und die Auswerteeinrichtung mit dem mindestens einen Ultraschallwandler (1) oder mindestens einem weiteren Ultraschallwandler (1) verbunden ist, welche jeweils ein empfangenes Echosignal in ein Empfangssignal für die Auswerteeinrichtung wandeln, wobei der mindestens eine Ultraschallwandler (1) und gegebenenfalls der mindestens eine weitere Ultraschallwandler (1) jeweils an einer von dem zu überwachenden Umfeld (31) des Kraftfahrzeugs (47) abgewandten Seite einer flächig ausgebildeten Fahrzeugkomponente, insbesondere eine Wand (2) eines Stoßfängers (3), stoffschlüssig angeordnet sind und das Aussenden des Ultraschallsendesignals in das Umfeld und das Empfangen des Echosignals aus dem Umfeld jeweils über ein lokales In-Schwingungen-Versetzen der jeweiligen Fahrzeugkomponente erfolgt,

**dadurch gekennzeichnet, dass**

die Auswerteeinheit (48) eine Korrelationseinheit (44) umfasst, die eine Kreuzkorrelation des Sendesignals mit dem Empfangssignal bildet und ferner ausgebildet ist, den oder die mehreren Abstände zu den Gegenständen (39) im Umfeld (31) anhand des bei der Korrelation mittels der Korrelationsfunktion berechneten Korrelationssignals zu ermitteln, und die Signalerzeugungseinrichtung (34) eine Modulationseinrichtung umfasst, die das periodische Schwingungssignal moduliert, um ein moduliertes Sendesignal zu erzeugen, wobei die Modulationseinrichtung ausgebildet ist, eine Frequenzmodulation auszuführen..

2. Umfelderfassungsvorrichtung (30) nach Anspruch 1, **dadurch gekennzeichnet, dass** das Sendesignal einen Pulsabschnitt (35a) und einen zeitlich unveränderlichen Konstantabschnitt (35b) umfasst und die Signalerzeugungseinrichtung (34) ausgebildet ist, den Pulsabschnitt (35a) aus einem zeitlich begrenzten Abschnitt eines periodischen Schwingungssignals abzuleiten.

3. Umfelderfassungsvorrichtung (30) nach Anspruch 1 oder 2, **dadurch gekennzeichnet, dass** als Modulationssignal ein binäres Signal genutzt wird, insbesondere ein Barker oder ein Goldcode oder eine Pseudozufallszahl

4. Umfelderfassungsvorrichtung (30) nach Anspruch 2 oder 3, **dadurch gekennzeichnet, dass** die Frequenzmodulation der Modulationseinrichtung einen Wechsel zwischen mindestens zwei Frequenzen im Bereich der Eigenfrequenz des mindestens einen Ultraschallwandlers (1) zum Erzeugen des Pulsabschnitts (35a) abhängig von dem Modulationssignal bewirkt.

5. Verfahren zur Umfelderfassung in einem Kraftfahrzeug umfassend die Schritte, Erzeugen eines elektrischen Sendesignals,
Wandeln des elektrischen Sendesignals in ein Ultraschallsendesignal;
Wandeln eines empfangenen Ultraschallechosignals (40) in ein Empfangssignal, Auswerten des Empfangssignals (43) zum Ermitteln von einem oder mehreren Abständen zu Gegenständen (39) in dem Umfeld (31) des Kraftfahrzeugs (47),
wobei eine Fahrzeugkomponente, insbesondere eine Wand (2) eines Stoßfängers (3), an einer von dem zu überwachenden Umfeld (31) abgewandten Seite mittels eines stoffschlüssig an der abgewandten Seite angeordneten Ultraschallwandlers (1) lokal zu Schwingungen angeregt wird, um durch die Fahrzeugkomponente, welche im Bereich der Anordnung des mindestens einen Ultraschallwandlers (1) eine dem Umfeld zugewandte geschlossene, ohne Durchbrüche ausgebildet Oberfläche aufweist, das Ultraschallsendesignal (38) in das Umfeld (31) auszusenden und das reflektierte Ultraschallechosignal, welches die Fahrzeugkomponente oder eine andere Fahrzeugkomponente zumindest lokal in Schwingungen versetzt, mittels des mindestens einen Ultraschallwandlers (1) oder mittels eines anderen an der dem Umfeld (31) abgewandten Seite der Fahrzeugkomponente oder an der dem Umfeld (31) abgewandten Seite der anderen Fahrzeugkomponente stoffschlüssig angeordneten weiteren Ultraschallwandlers empfangen und in das Empfangssignal gewandelt wird, **dadurch gekennzeichnet, dass**
beim Auswerten eine Kreuzkorrelation zwischen dem Empfangssignal und dem Sendesignal gebildet wird und hierbei ein Korrelationssignal berechnet wird und der eine oder die mehreren Abstände zu den Gegenständen anhand des Korrelationssignals ermittelt werden,wobei das Sendesignal mittels einer Frequenzmodulation moduliert wird.

6. Verfahren nach Anspruch 5, **dadurch gekennzeichnet, dass** das Sendesignal aus einem Pulsabschnitt (35a) und einem zeitlich unveränderlichen Konstantabschnitt (35b) gebildet wird, wobei der Pulsabschnitt (35a) aus mindestens einem zeitlich begrenzten Abschnitt eines periodischen Schwingungssignals abgeleitet wird oder als solches erzeugt wird.

7. Verfahren nach Anspruch 6, **dadurch gekennzeichnet, dass** bei der Frequenzmodulation ein Wechsel zwischen mindestens zwei Frequenzen im Bereich der Eigenfrequenz des mindestens einen Ultraschallwandlers (1) abhängig von einem Modulationssignal, welches vorzugsweise einen Bakercode, einen Goldcode oder eine Pseudozufallszahl repräsentiert, bewirkt wird, um den Pulsabschnitt (35a) des Sendesignals zu erzeugen.

8. Verfahren nach einem der Ansprüche 5 bis 7, **dadurch gekennzeichnet, dass** als Sendesignal für die Korrelation das Signal genutzt wird, welches aus dem Schwingungssignal des Ultraschallwandlers (1) beim Senden des Pulsabschnitts des Sendesignals abgeleitet wird.

**Claims**

1. Environment monitoring device (30) in a motor vehicle, comprising:

   a signal generating device (34) for generating a transmitted signal;
   at least one ultrasonic transducer (1) for converting electric oscillations into acoustic oscillations and/or vice versa;
   an evaluating device which evaluates a received signal in order to determine one or more distances from objects in an environment of the motor vehicle, wherein the signal generating device (34) is linked to the at least one ultrasonic transducer (1) so that the ultrasonic transducer (1) radiates a transmitted ultrasonic signal into the environment in accordance with the electric transmitted signal and the evaluating device is connected to the at least one ultrasonic transducer (1) or at least one further ultrasonic transducer (1) which in each case convert a received echo signal into a received signal for the evaluating device, wherein

   the at least one ultrasonic transducer (1) and, if appropriate, the at least one further ultrasonic transducer (1) are in each case arranged integrally on a side, facing away from the environment (31) to be monitored of the motor vehicle (47), of a vehicle component of planar construction, especially a wall (2) of a bumper (3), and the emission of the transmitted ultrasonic signal into the environment and the reception of the echo signal from the environment in each case takes place by locally causing the respective vehicle component to oscillate, **characterized in that** the evaluating unit (48) comprises a correlation unit (44) which forms a cross-correlation of the transmitted signal with the received signal and is also constructed to determine the one or more distances from the objects (39) in the environment (31) by means of the correlation signal calculated by means of the correlation function during the correlation, and the signal generating device (34) comprises a modulation device which modulates the period oscillation signal in order to generate a modulated transmitted signal, wherein the modulation device is constructed for carrying out a frequency modulation.

2. Environment monitoring device (30) according to Claim 1, **characterized in that** the transmitted signal comprises a pulse section (35a) and a temporally invariable constant section (35b) and the signal generating device (34) is constructed for deriving the pulse section (35a) from a time-limited section of a periodic oscillation signal.

3. Environment monitoring device (30) according to Claim 1 or 2, **characterized in that** a binary signal is used as modulation signal, especially a Barker or a Gold code or a pseudo random number.

4. Environment monitoring device (30) according to Claim 2 or 3, **characterized in that** the frequency modulation of the modulation device effects a change between at least two frequencies within the range of the natural frequency of the at least one ultrasonic transducer (1) for generating the pulse section (35a) in dependence on the modulation signal.

5. Method for environment monitoring in a motor vehicle comprising the steps of

   generating a transmitted electric signal, converting the transmitted electric signal into a transmitted ultrasonic signal;
   converting a received ultrasonic echo signal (40) into a received signal,
   evaluating the received signal (43) for determining one or more distances from objects (39) in the environment (31) of the motor vehicle (47),

   wherein a vehicle component, especially a wall (2) of a bumper (3), is excited locally into oscillations on a side facing away from the environment (31) to be monitored by means of an ultrasonic transducer (1) arranged integrally on the side facing away in order to emit the transmitted ultrasonic signal (38) into the environment (31) by means of the vehicle component which has a closed surface, facing the environment, formed without penetrations in the area of the arrangement of the at least one ultrasonic transducer (1), and the reflected ultrasonic echo signal which causes the vehicle component or another vehicle component to oscillate at least locally by means of the at least one ultrasonic transducer (1) or by means of another further ultrasonic transducer arranged integrally on the side of the vehicle component facing away from the environment (31) or on the side of the other vehicle component facing away from the environment (31) is received and converted into the received signal,
**characterized in that**
during the evaluating, a cross-correlation is formed between the received signal and the transmitted signal and in this context a correlation signal is calculated and the one or the several distances from the objects are determined by means of the correlation signal, wherein the transmitted signal is modulated by means of a frequency modulation.

6. Method according to Claim 5, **characterized in that** the transmitted signal is formed from a pulse section (35a) and a temporally invariable constant section (35b), wherein the pulse section (35a) is derived from at least one time-limited section of a periodic oscillation signal or is generated as such a one.

7. Method according to Claim 6, **characterized in that**, in the case of the frequency modulation, a change between at least two frequencies in the range of the natural frequency of the at least one ultrasonic transducer (1) is effected in dependence on a modulation signal which preferably represents a Barker code, a Gold code or a pseudo random number, in order to generate the pulse section (35a) of the transmitted signal.

8. Method according to one of Claims 5 to 7, **characterized in that** the signal which is derived from the oscillation signal of the ultrasonic transducer (1) during the transmission of the pulse section of the transmitted signal is used as transmitted signal for the correlation.

## Revendications

1. Dispositif de détection de l'environnement (30) dans un véhicule automobile, comprenant :

   un système de génération de signaux (34) destiné à générer un signal d'émission ;
   au moins un transducteur d'ultrasons (1) destiné à transformer des oscillations électriques en oscillations acoustiques et/ou inversement ;
   un système d'évaluation qui évalue un signal de réception pour déterminer un ou plusieurs écarts par rapport à des objets dans un environnement du véhicule automobile, le système de génération de signaux (34) étant interconnecté avec l'au moins un transducteur d'ultrasons (1), de sorte qu'en fonction du signal d'émission électrique, le transducteur d'ultrasons (1) délivre un signal d'émission d'ultrasons dans l'environnement et l'unité d'évaluation étant reliée avec au moins un transducteur d'ultrasons (1) ou au moins un transducteur d'ultrasons (1) supplémentaire, qui convertissent chacun un signal d'écho réceptionné en un signal de réception pour l'unité d'évaluation, l'au moins un transducteur d'ultrasons (1) et le cas échéant, l'au moins un transducteur d'ultrasons (1) supplémentaire étant placés par adhérence de matière respectivement sur un côté opposé à l'environnement (31) du véhicule automobile (47) à surveiller d'un composant plan du véhicule, notamment d'une paroi (2) d'un pare-chocs (3) et la délivrance du signal d'émission à ultrasons dans l'environnement et la réception du signal d'échos à partir de l'environnement s'effectuant respectivement par l'intermédiaire d'une mise en oscillation locale du composant de véhicule concerné,
   **caractérisé en ce que**
   l'unité d'évaluation (48) comprend une unité de corrélation (44) qui crée une corrélation croisée du signal d'émission avec le signal de réception et qui est conçue par ailleurs pour déterminer l'écart ou les plusieurs écarts par rapport aux objets (39) dans l'environnement (31) à l'aide du signal de corrélation calculé lors de la corrélation, au moyen de la fonction de corrélation
   et le système de génération de signal (34) comprend un système de modulation qui module le signal d'oscillation périodique pour générer un signal d'émission modulé, le système de modulation étant conçu pour réaliser une modulation de fréquence.

2. Dispositif de détection de l'environnement (30) selon la revendication 1, **caractérisé en ce que** le signal d'émission comprend une partie d'impulsion (35a) et une partie constante (35b) invariable dans le temps et **en ce que** le système de génération de signaux (34) est conçu pour dériver la partie d'impulsion (35a) d'une partie limitée dans le temps d'un signal d'oscillation périodique.

3. Dispositif de détection de l'environnement (30) selon la revendication 1 ou 2, **caractérisé en ce qu'**en tant que signal de modulation, il est utilisé un signal binaire, notamment un Barkercode ou un Goldcode ou un nombre pseudo-aléatoire.

4. Dispositif de détection de l'environnement (30) selon la revendication 2 ou la revendication 3, **caractérisé en ce que** la modulation de fréquence du système de modulation provoque un changement entre au moins deux fréquences dans l'ordre de la fréquence propre de l'au moins un transducteur d'ultrasons (1) pour la génération de la partie d'impulsion (35a), en fonction du signal de modulation.

5. Procédé destiné à détecter l'environnement dans un véhicule automobile comprenant les étapes,
génération d'un signal d'émission électrique,
conversion du signal d'émission électrique en un signal d'émission à ultrasons,
conversion d'un signal d'écho à ultrasons (40) reçu en un signal de réception,
évaluation du signal de réception (43) pour déterminer un ou plusieurs écarts par rapport à des objets (39) dans l'environnement (31) du véhicule automobile (47),
un composant du véhicule, notamment une paroi (2) d'un pare-chocs (3) étant excité localement en oscillations sur un côté opposé à l'environnement (31) à surveiller, au moyen d'un transducteur d'ultrasons (1) placé par adhérence de matière sur le côté opposé, pour émettre via le composant du véhicule, lequel dans la zone de la disposition de l'au moins un transducteur d'ultrasons (1) comporte une surface fermée faisant face à l'environnement, conçue sans passages, le signal d'émission à ultrasons (38) dans l'environnement (31) et pour réceptionner le signal d'écho à ultrasons réfléchi, lequel amène au moins localement en oscillation le composant du véhicule ou un autre composant du véhicule au moyen de l'au moins un transducteur d'ultrasons (1) ou au moyen d'un transducteur d'ultrasons supplémentaire placé par adhérence de matière sur le côté du composant du véhicule qui est opposé à l'environnement (31) ou sur le côté qui est opposé à l'environnement (31) de l'autre composant de véhicule et est transformé en le signal de réception,
**caractérisé en ce que**
lors de l'évaluation, il est créé une corrélation croisée entre le signal de réception et le signal d'émission et à cet effet, il est calculé un signal de corrélation et l'écart ou les plusieurs écarts par rapport aux objets sont déterminés à l'aide du signal de corrélation, le signal d'émission étant modulé au moyen d'une modulation de fréquence.

6. Procédé selon la revendication 5, **caractérisé en ce que** le signal d'émission est formé par une partie d'impulsion (35a) et par une partie constante (35b) invariable dans le temps, la partie d'impulsion (35a) étant dérivée à partir d'au moins une partie limitée dans le temps d'un signal d'oscillation périodique ou générée en tant que telle.

7. Procédé selon la revendication 6, **caractérisé en ce que** lors de la modulation de fréquence, il est provoqué un changement entre au moins deux fréquences dans l'ordre de la propre fréquence de l'au moins un transducteur d'ultrasons (1), en fonction d'un signal de modulation, qui est de préférence un Barkercode ou un Goldcode ou un nombre pseudo-aléatoire, pour générer la partie d'impulsion (35a) du signal d'émission.

8. Procédé selon l'une quelconque des revendications 5 à 7, **caractérisé en ce qu'**en tant que signal d'émission pour la corrélation, il est utilisé le signal qui est dérivé du signal d'oscillation du transducteur d'ultrasons (1) lors de l'émission de la partie d'impulsion du signal d'émission.

FIG. 1

FIG. 2

$$\Psi(\tau) = \frac{1}{2T} \int_{-T}^{T} s(t)e(t - \tau)dt$$

FIG. 3

Erzeugen eines Sendesignals — 61

Erzeugen eines Pulsabschnitts als Schwindungssignal — 62

Erzeugen eines Konstantabschnitts als Nullsignal — 63

Modulation des Sendesignals — 64

D/A-Wandlung — 65

Verstärkung — 66

Wandeln des Sendesignals in Ultraschallsendesignal — 67

Empfangen eines Echosignals und Wandeln in ein elektrisches Signal — 68

A/D-Wandlung des elektrischen Signals in ein Empfangssignal — 69

Auswerten des Empfangssignals — 70

Korrelation des Sendesignals mit dem Empfangssignals — 71

Ermitteln von Abständen zu Gegenständen im Umfeld anhand des Korrelationsergebnisses — 72

# FIG. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1619518 A1
- DE 69210584 T2
- WO 2008125260 A1
- US 20070115102 A1
- EP 0797105 A2

**In der Beschreibung aufgeführte Nicht-Patentliteratur**

- **A. HERNANDEZ.** Ultrasonic ranging sensor using simultaneous emissions from different transducers. *IEEE Transactions On Ultrasonics, Ferroelectics and Frequency Control,* Dezember 2004, vol. 12 (12), 1660-1670
- **A. HERNANDEZ.** Ultrasonic Sensory System for Mobile Robots and Autonomous Vehicles. *Industrial Electronics, 2007. ISIE 2007. IEEE International Symposium ON,* 01. Juni 2007, 1548-1553